# EUROPEAN PATENT APPLICATION

(11) **EP 2 680 170 A1**
(43) Date of publication of application: **01.01.2014**
(21) Application number: 13173833.8
(22) Date of filing: 26.06.2013
(51) Int. Cl.: G06F 17/30

(54) **Apparatus and method for displaying a web page in a portable terminal**

(30) Priority: 26.06.2012 KR 20120068474
(71) Applicant: Samsung Electronics Co., Ltd, Gyeonggi-do 443-742 (KR)
(72) Inventor: Bae, Hye-Rim, 443-742 Gyeonggi-do (KR)
(74) Representative: Nederlandsch Octrooibureau

(57) **Abstract**

A portable terminal includes an apparatus capable of performing a method for displaying a web page. When an event requesting a movement of a display region is input, an estimated moving point of a display region is checked based on the event, a tag closest to the estimated moving point among a plurality of tags included in a source code of the web page is determined, and the display region is displayed on using the tag as a boundary.

## Description

### TECHNICAL FIELD OF THE INVENTION

The present disclosure relates generally to a portable terminal, and more particularly, to an apparatus and a method for displaying a web page in a portable terminal.

### BACKGROUND OF THE INVENTION

Portable terminals, such as a smart phone and a tablet, and the like, provide many useful functions to users, based on various types of applications. Meanwhile, a portable terminal has been changed to devices capable of using various types of data while performing a voice call function, based on various types of applications.

An example of various functions includes an Internet connection function that accesses a web site. Generally, a portable terminal displays some region of a web page using the Internet connection function and a user may recognize some region of the displayed web page.

Meanwhile, when a flick for displaying another region of the web page is input from a user, the portable terminal displays some region of the web page based on any position of the web page.

However, the display of the web page is performed based on any position of the web page, which causes a problem in that paragraphs or articles included in the web page are displayed while being cut.

### SUMMARY OF THE INVENTION

To address the above-discussed deficiencies of the prior art, it is a primary object to provide an apparatus and a method for displaying a web page without paragraphs or articles included in a category of the web page being cut.

In accordance with embodiments of the present disclosure, an apparatus for displaying a web page in a portable terminal is provided. The apparatus includes: a display unit; and a controller for checking an estimated moving point of a display region based on an event requesting a movement of the display region when the event is input, determining a tag closest to the estimated moving point among a plurality of tags included in a source code of the web page, and displaying the display region on the display unit using the tag as a boundary.

In accordance with another embodiment of the present disclosure, a method for displaying a web page in a portable terminal is provided. The method includes: when an event requesting a movement of a display region is input, checking an estimated moving point of the display region based on the event; determining a tag closest to the estimated moving point among a plurality of tags included in a source code of the web page; and displaying the display region using the tag as a boundary.

Before undertaking the DETAILED DESCRIPTION below, it may be advantageous to set forth definitions of certain words and phrases used throughout this patent document: the terms "include" and "comprise," as well as derivatives thereof, mean inclusion without limitation; the term "or," is inclusive, meaning and/or; the phrases "associated with" and "associated therewith," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, or the like; and the term "controller" means any device, system or part thereof that controls at least one operation, such a device may be implemented in hardware, firmware or software, or some combination of at least two of the same. It should be noted that the functionality associated with any particular controller may be centralized or distributed, whether locally or remotely. Definitions for certain words and phrases are provided throughout this patent document, those of ordinary skill in the art should understand that in many, if not most instances, such definitions apply to prior, as well as future uses of such defined words and phrases.

### BRIEF DESCRIPTION OF THE DRAWINGS

For a more complete understanding of the present disclosure and its advantages, reference is now made to the following description taken in conjunction with the accompanying drawings, in which like reference numerals represent like parts:

FIG. 1 illustrates a block configuration diagram of a portable terminal according to an embodiment of the present disclosure;

FIG. 2 illustrates a display region of a web page according to an embodiment of the present disclosure;

FIG. 3 illustrates a process for displaying a web page in a portable terminal according to a first embodiment of the present disclosure;

FIG. 4 illustrates a process for displaying a web page in a portable terminal according to a second embodiment of the present disclosure;

FIG. 5 illustrates a source code of the web page according to an embodiment of the present disclosure; and

FIGS. 6A to 6D illustrates a screen on which a web page is output, according to an embodiment of the present disclosure.

### DETAILED DESCRIPTION OF THE INVENTION

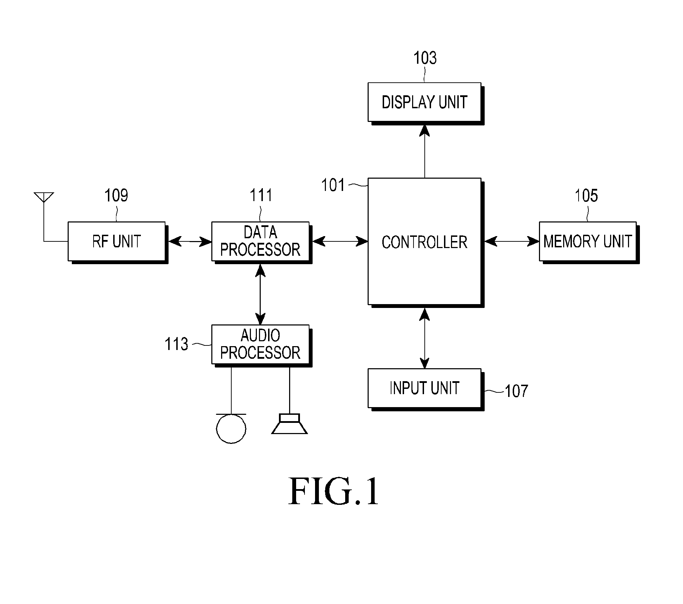

FIGURES 1 through 6D, discussed below, and the various embodiments used to describe the principles of the present disclosure in this patent document are by way of illustration only and should not be construed in any way to limit the scope of the disclosure. Those skilled in the art will understand that the principles of the present disclosure may be implemented in any suitably arranged wireless communications device. Hereinafter, various embodiments of the present disclosure will be described with reference to the accompanying drawings. Further, in the following description of the present disclosure, a detailed description of known functions and configurations incorporated herein will be omitted when it makes the subject matter of the present disclosure rather unclear.

A portable terminal according to an embodiment of the present disclosure is a mobile electronic device that can be easily carried, such as a video phone, a mobile phone, a smart phone, an international mobile telecommunication 2000 (IMT-2000) terminal, a WCDMA terminal, a universal mobile telecommunication service (UMTS) terminal, a personal digital assistant (PDA), a portable multimedia player (PMP), a digital multimedia broadcasting (DMB) terminal, an E-book, a portable computer (notebook, tablet, and the like), a digital camera, and the like.

FIG. 1 illustrates a block configuration diagram of a portable terminal according to an embodiment of the present disclosure.

Referring to FIG. 1, a portable terminal includes a controller 101, a display unit 103, a memory unit 105, an input unit 107, a wireless transmitting and receiving unit 109, a data processor 111, and an audio processor 113.

The wireless transmitting and receiving unit 109 performs a wireless communication function of the portable terminal. More particularly, the wireless transmitting and receiving unit 109 includes a wireless transmitter that up-converts and amplifies a frequency of a transmitted signal, a wireless receiver that low-noise-amplifies and down-converts a received signal, and the like. In addition, the data processor 111 includes a transmitter that encodes and modulates the transmitted signal, a receiver that demodulates and decodes the received signal, and the like. In this configuration, the data processor 111 is configured to include a modem and a codec, wherein the codec includes a data codec that processes packet data, and the like, and an audio codec that processes audio signals such as voice, and the like.

In addition, the audio processor 113 serves to play the received audio signals output from the data processor 111 using a speaker or to transmit the transmitted audio signal generated from a microphone to the data processor 111. Further, the input unit 107 includes keys that input alphanumeric data and various function keys that set various functions; and the display unit 103 displays video signals on a screen and displays data that is received as an output request from the controller 101.

When the display unit 103 is implemented by a capacitive or resistive touch display type, and the like, the input unit 107 includes only a predetermined minimum key; and the display unit 103 substitutes a part of a key input function of the input unit 107. In particular, in the present disclosure, it is assumed that the display unit 103 is implemented by a touch display screen type.

Further, the memory unit 105 includes a program memory and a data memory. In this case, the program memory stores booting and operating systems (hereinafter, referred to as 'OS') for controlling general operations of a portable terminal, and the data memory stores various types of data that are generated during an operation of a portable terminal. In particular, the memory unit 105 stores a source code of a web page. In this case, the source code of the web page signifies writing that is indicated by a programming language and includes tags for identifying articles or paragraphs included in a web page. In addition, the tag is an identifier for identifying categories, articles, or paragraphs included in the web page, for example, div, iframe, html5, and the like.

In addition, the controller 101 performs a function for controlling general operations of a portable terminal. In particular, the controller 101 determines a moving point of a display region using a tag included in a source code of a web page and moves the display region to the determined moving point, when an event for moving a display region is input from a user during the display of the web page.

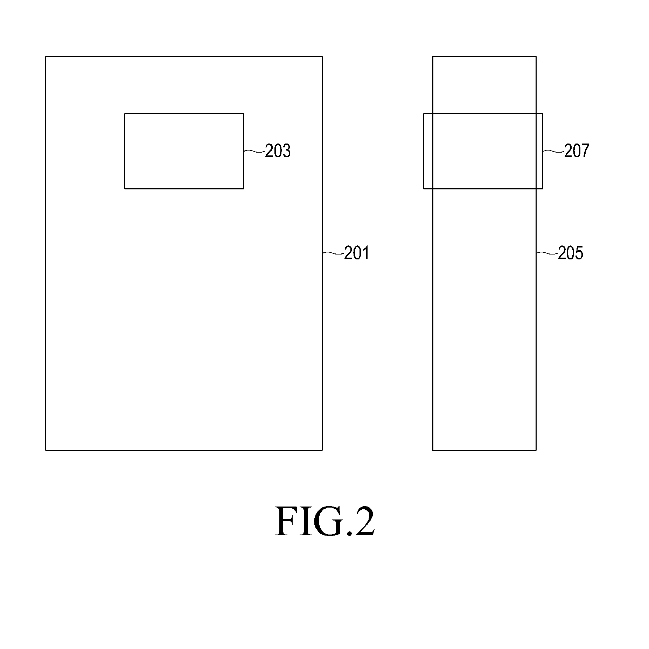

FIG. 2 illustrates a display region of a web page according to an embodiment of the present disclosure. Hereinafter, a display region of a web page will be described with reference to FIG. 2.

FIG. 2 illustrates a web page 201 of a web site and a display region 203 that indicates a region displayed on the screen of the portable terminal in the web page 201. When a display request of the web page is input, the controller 101 displays an image and a character included in the display region 203 through a display unit 103.

In addition, FIG. 2 shows a web page 205 of a wireless application protocol (WAP) site and a display region 207 displaying an image on the screen of the portable terminal in the web page 205. When a display request of the web page is input, the controller 101 displays an image and a character included in the display region 207 through a display unit 103. In this case, the WAP site signifies a site that is provided so as to enable a user to easily read in a portable terminal having a screen having a smaller size than a terminal such as a desktop.

Describing in more detail an operation of displaying the display region of the controller 101, the controller 101 displays the web page. In this case, the controller 101 outputs characters or images included in the predetermined display region in the web page through the display unit 103. Further, the controller 101 determines whether an event for moving the display region is input from a user.

In this case, the event indicates an input of a user that requests the movement of the display region. Examples of the event include a pupil motion of a user, a flick of a user's finger or a stylus pen, and a motion of a user's finger.

In this case, a method for moving a display region that uses a pupil motion of a user signifies a method for moving a display region of a web page in a moving direction of a pupil when the user's pupil moves in a specific direction and then stops for a predetermined time. In addition, the method for moving a display region using the flick of the user's finger or the stylus pen signifies a method for moving a display region of a web page in the moving direction of the user's finger or the stylus pen when the user's finger or the stylus pen is flicked. Further, the method for moving a display region using the finger motion of a user signifies a method for recognizing a finger motion of a user, determining a moving direction of a user, and moving a display region of a web page in a moving direction of the determined user's finger, in the state in which the user's finger does not contact the display unit 103.

Further, the controller 101 checks an estimated moving point of the display region in the web page based on the input event. For example, in the case of the method for moving a display region using the pupil motion of a user as the input event, the controller 101 determines a moving direction of a pupil and a stopping time of a pupil and check the estimated moving point of the display region in consideration of the determined moving direction and stopping time of a pupil.

As another example, in the case of the method for moving a display region using the flick of the user's finger or the stylus pen as the input event, the controller 101 determines a moving direction of a finger, a moving direction of a stylus pen, a contact strength of a finger, or a contact strength of a stylus pen and checks an estimated moving point of a display region in consideration of the determined moving direction of a finger, moving direction of a stylus pen, contact strength of a finger, or contact strength of a stylus pen. As another example, in the case of the method for moving a display region using the finger motion of a user as the input event, the controller 101 determines a moving direction of a finger and a moving distance of a finger and checks the estimated moving point of the display region in consideration of the determined moving direction and moving distance of a finger.

In this case, when an event is an event moving the display region downwardly, the controller 101 estimates a code to be displayed at a lowest portion of the display regions 203 and 207 and determines a point corresponding to the estimated code as the estimated moving point of the display region.

In addition, the controller 101 checks a tag closest to the checked estimated moving point among the tags included in the source code of the web page and checks the moving point corresponding to the tag checked within the web page. In addition, the controller 101 displays the display region, using the checked moving point as a boundary.

According to the foregoing operation, the controller 101 displays the web page without cutting the articles or the paragraphs included in the web page.

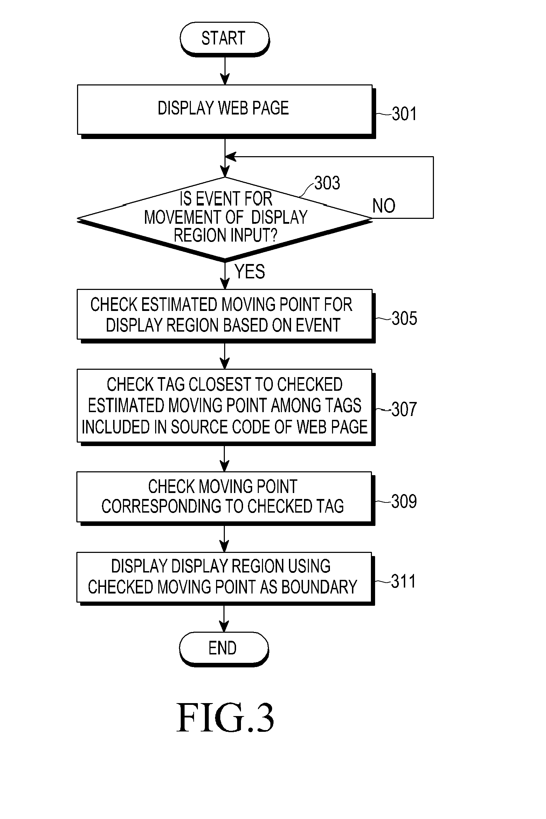

FIG. 3 illustrates a process for displaying a web page in a portable terminal according to a first embodiment of the present disclosure.

Referring to FIG. 3, the controller 101 displays the web page in step 301 and then, proceeds to step 303. In this case, the controller 101 outputs characters or images included in the predetermined display region in the web page through the display unit 103.

Further, in step 303, the controller 101 determines whether an event for moving the display region is input from a user.

In this case, the event indicates an input of a user that requests the movement of the display region. Examples of the event include the pupil motion of a user, the flick of the user's finger or the stylus pen, and the motion of the user's finger.

First, the method for moving a display region that uses the pupil motion of a user signifies the method for moving a display region of a web page in the moving direction of a pupil when the user's pupil moves in a specific direction and then stops for a predetermined time. In addition, the method for moving a display region using the flick of the user's finger or the stylus pen signifies a method for moving a display region of a web page in the moving direction of the user's finger or the stylus pen when the user's finger or the stylus pen is flicked. Further, the method for moving a display region using the finger motion of a user signifies a method for recognizing a finger motion of a user, determining a moving direction of a user, and moving a display region of a web page in a moving direction of the determined user's finger, in the state in which the user's finger does not contact the display unit 103.

If the event is input, the controller 101 proceeds to step 305 and otherwise, repeatedly performs step 303.

If the controller 101 proceeds to step 305, the controller 101 checks the estimated moving point of the display region in the web page based on the input event and then, proceeds to step 307. For example, in the case of the method for moving a display region using the pupil motion of a user as the input event, the controller 101 determines a moving direction of a pupil and a stopping time of a pupil and checks the estimated moving point of the display region in consideration of the determined moving direction and stopping time of a pupil.

As another example, in the case of the method for moving a display region using the flick of the user's finger or the stylus pen as the input event, the controller 101 determines the moving direction of a finger, the moving direction of a stylus pen, the contact strength of a finger, or the contact strength of a stylus pen and checks the estimated moving point of a display region in consideration of the determined moving direction of a finger, moving direction of a stylus pen, contact strength of a finger, or contact strength of a stylus pen.

As another example, in the case of the method for moving a display region using the finger motion of a user as the input event, the controller 101 determines the moving direction of a finger and the moving distance of a finger and check the estimated moving point of the display region in consideration of the determined moving direction and moving distance of a finger.

In 307, the controller 101 checks a tag closest to the checked estimated moving point among the tags included in the source code of the web page and checks the moving point corresponding to the tag checked within the web page in step 309 and then, proceeds to step 311. In addition, in step 311, the controller 101 displays the display region, using the checked moving point as a boundary.

According to the foregoing operation, the controller 101 displays the web page without cutting the articles or the paragraphs included in the web page.

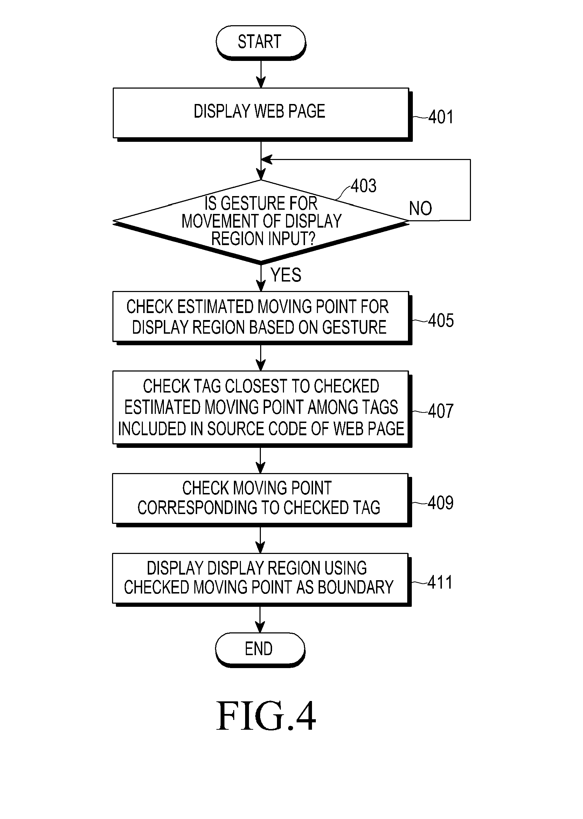

FIG. 4 illustrates a process for displaying a web page in a portable terminal according to a second embodiment of the present disclosure.

Referring to FIG. 4, the controller 101 displays the web page in step 401 and then, proceeds to step 403. In this case, the controller 101 outputs characters or images included in the predetermined display region in the web page through the display unit 103.

Further, in step 403, the controller 101 determines whether a gesture for moving the display region is input from a user.

In this case, the gesture indicates an input of a user that requests the movement of the display region. For example, the gesture can be the flick of the user' finger or the stylus pen. In addition, the method for moving a display region using the flick of the user's finger or the stylus pen signifies a method for moving a display region of a web page in the moving direction of the user's finger or the stylus pen when the user's finger or the stylus pen is flicked.

If the gesture is input, the controller 101 proceeds to step 405 and otherwise, repeatedly performs step 403.

If the controller proceeds to step 405, the controller 101 checks the estimated moving point of the display region in the web page based on the input gesture and then, proceeds to step 407. As another example, in the case of using the flick of the user's finger or the stylus pen as the input gesture, the controller 101 determines the moving direction of a finger, the moving direction of a stylus pen, the contact strength of a finger, or the contact strength of a stylus pen and checks the estimated moving point of a display region in the web page in consideration of the determined moving direction of a finger, moving direction of a stylus pen, contact strength of a finger, or contact strength of a stylus pen.

In addition, in step 407, the controller 101 checks a tag closest to the checked estimated moving point among the tags included in the source code of the web page and checks the moving point corresponding to the tag checked within the web page in step 409 and then, proceeds to step 411. In addition, in step 411, the controller 101 displays the display region, using the checked moving point as a boundary.

According to the foregoing operation, the controller 101 displays the web page without cutting the articles or the paragraphs included in the web page.

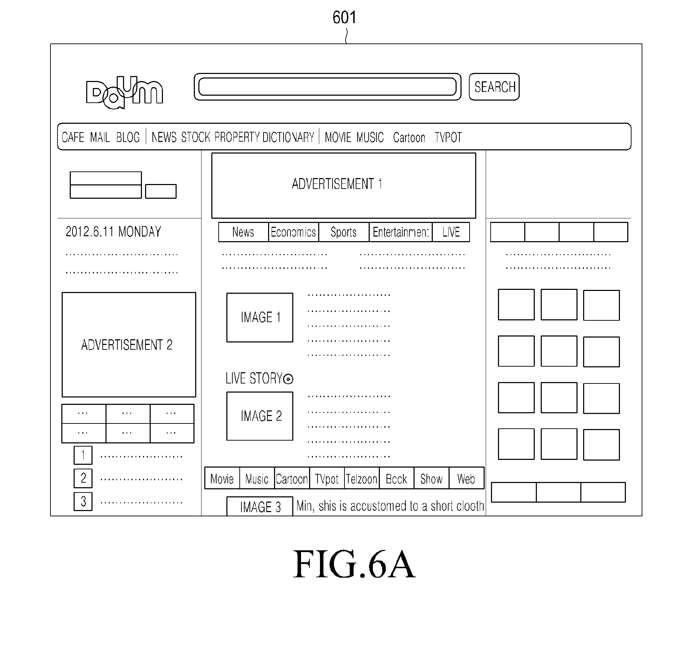

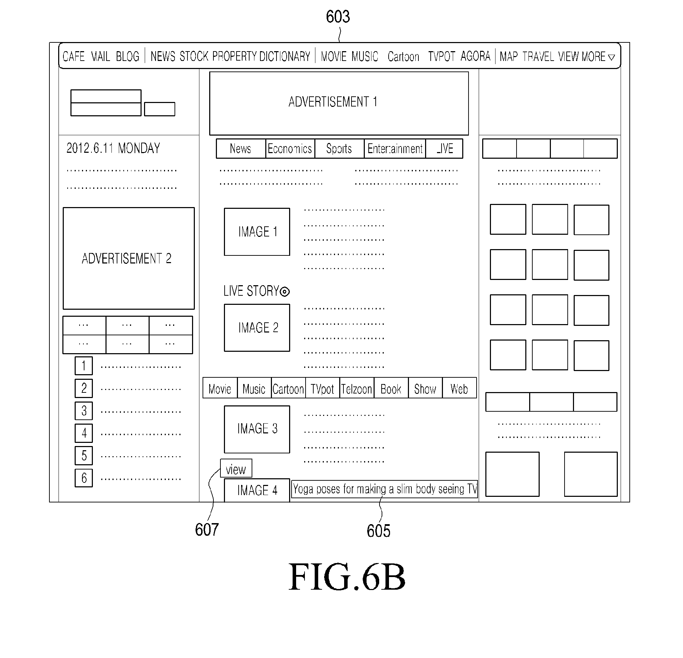

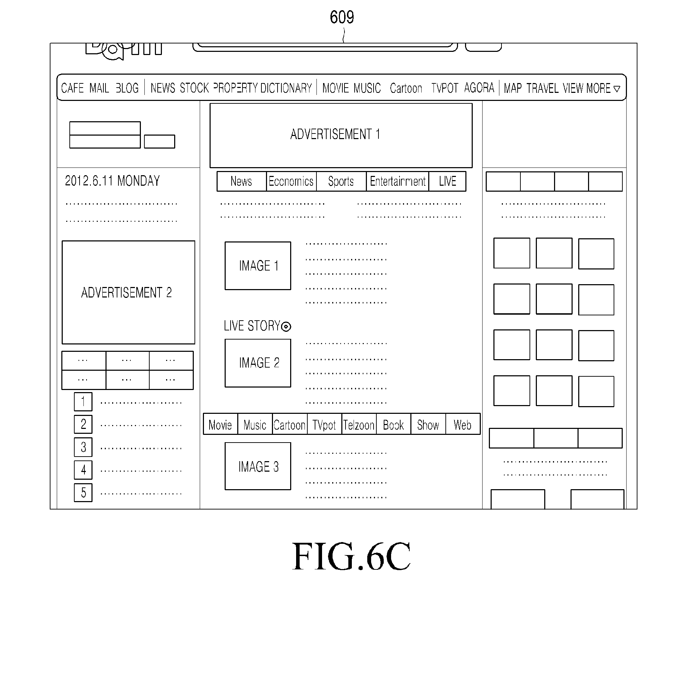

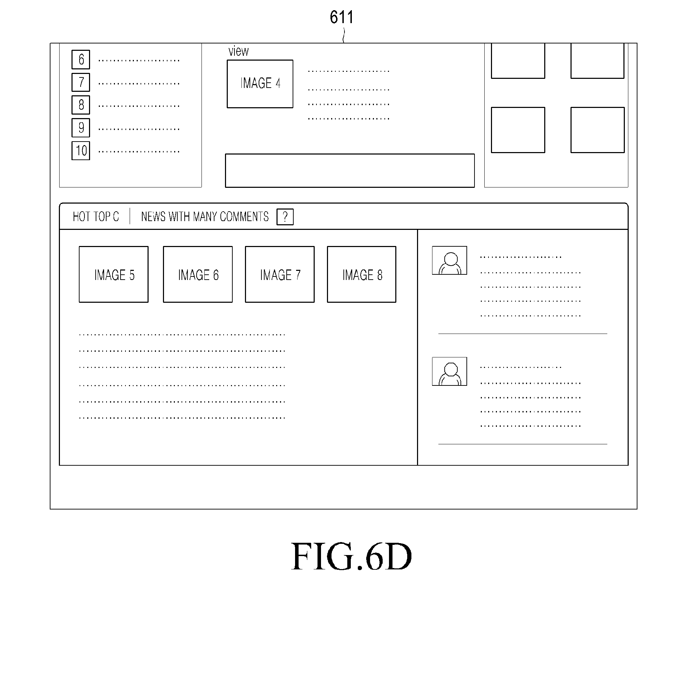

FIGS. 6A to 6D illustrate a screen on which a web page is output, according to an embodiment of the present disclosure. In FIGS. 6A to 6D, it is assumed that the event input by a user is an event that moves the display region downwardly in the web page.

Referring to FIGS. 6A to 6D, a screen 601 is an initial screen displaying a web page. When a display of a web page that is referred to as 'next' is requested by a user, the controller 101 outputs the screen 601 through the display unit 103. Further, a screen 603 is a screen to which the display region moves, according to a general method. Further, the screen 609 and the screen 611 are a screen to which the display region moves, according to the present disclosure.

When comparing the screen 603 with the screens 609 and 611, the screen 603 includes 'a yoga instructor getting in shape while watching TV at home' 605 that is included in a category referred to as a View 607. As such, the screen 603 includes only a part of all articles of a News category, all articles of a Live Story category, and all articles included in the View 607 category, such that the controller 101 displays a web page in which contents included in a specific category are cut.

Meanwhile, the screens 609 and 611 are screens that display the display regions based on the View 607 category. More particularly, the screen 609 is a screen including all articles of the News category present before the View 607 category and a screen including all articles of the Live Story category. Further, the screen 611 is a screen that includes all articles included in the View 607 category and all articles included in a Hot Topic category.

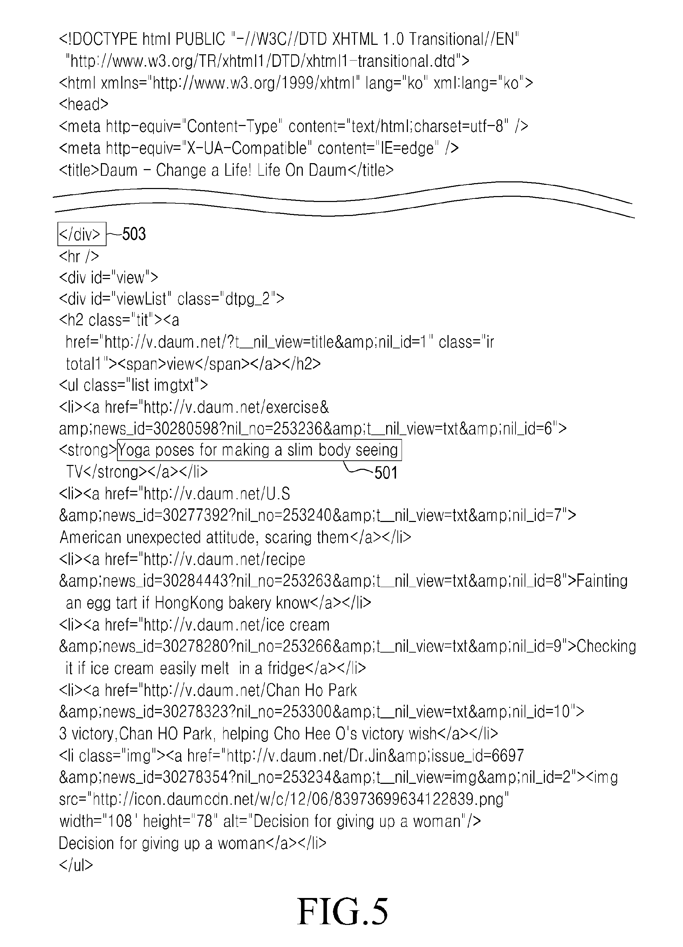

Describing the operation of outputting the screens 609 and 611 with reference to FIG. 5, when the event for moving the display region in the screen 601 is input, the controller 101 checks the estimated moving point for the display region within the web page based on the event. For example, the controller 101 checks a code of the 'yoga instructor getting in shape while watching TV at home' 501 as the estimated moving point.

Further, the controller 101 determines the tag closest to the estimated moving point among a plurality of tags included in the source code of the web page. For example, the controller 101 determines </div> 503 as the tag closest to the estimated moving point. Further, the controller 101 outputs the display region using the determined tag as a boundary. For example, when the output of the display region is set as outputting an upper portion of the tag determined within the web page, the controller 101 outputs the display region so as not to include the View 607 that is a category corresponding to the determined tag, such as the screen 609. As another example, when the output of the display region is set as outputting a lower portion of the tag determined within the web page, the controller 101 outputs the display region so as to include the View 607 that is a category corresponding to the determined tag, such as the screen 611.

As described above, the screens 609 and 611 output the category based on the View 607 category in the web page, such that the controller 101 displays the web page without cutting the contents included in the specific category.

According to the embodiments of the present disclosure, it is possible to display the web page without paragraphs or articles included in a category of the web page being cut, by displaying the web page using tags for identifying the paragraphs or the articles.

Meanwhile, the present disclosure describes the detailed embodiments such as a mobile communication terminal, but various modifications may be utilized without departing from the scope of the present disclosure. Therefore, it is obvious that the scope of the present disclosure is not defined by the foregoing embodiments but affects equivalent scope as well as claims.

After it is assumed that an embodiment of the present disclosure moves the display region downwardly, the embodiment of the present disclosure is applied, but can be applied even when the display region moves in top/left/right directions. For example, when the event commanding the display region in a left direction is input, the controller 101 estimates a code to be displayed in the leftmost portion of the display region among codes of the web page and determines the estimated code as the estimated moving point of the display region. Further, the controller 101 checks the tag closest to the estimated code among the plurality of tags included in the source code of the web page. Further, the controller 101 outputs the display region using a point corresponding to the checked tag as a boundary.

According to the embodiments of the present disclosure, it is possible to display the web page without paragraphs or articles included in a category of the web page being cut, by displaying the web page using tags for identifying the paragraphs or the articles.

Although the present disclosure has been described with an exemplary embodiment, various changes and modifications may be suggested to one skilled in the art. It is intended that the present disclosure encompass such changes and modifications as fall within the scope of the appended claims.

## Claims

1. An apparatus for displaying a web page (201) in a portable terminal, comprising:
a display unit (103); and
a controller (101) configured to check an estimated moving point of a display region (203) based on an event requesting a movement of the display region when the event is input, determining a tag (503) closest to the estimated moving point among a plurality of tags included in a source code of the web page, and configured to display the display region on the display unit using the tag as a boundary.

2. The apparatus of claim 1, wherein the tag is an identifier is configured to identify a category included in the web page.

3. The apparatus of claim 1, wherein the event includes at least one of a pupil motion of a user, a flick of any one of a user's finger and a stylus pen, and a finger motion of a user.

4. The apparatus of claim 1, wherein the display region indicates a region displayed on a screen (601) of the portable terminal in the web page.

5. The apparatus of claim 1, wherein the controller displays the display region so as to include a category corresponding to the tag.

6. The apparatus of claim 1, wherein the controller displays the display region so as not to include a category corresponding to the tag.

7. A method of displaying a web page (201) in a portable terminal, comprising:
when the event requesting a movement of a display region (203) is input, checking an estimated moving point of the display region based on the event;
determining a tag (503) closest to the estimated moving point among a plurality of tags included in a source code of the web page; and
displaying the display region using the tag as a boundary.

8. The method of claim 7, wherein the tag is an identifier configured to identify a category (607) included in the web page.

9. The method of claim 7, wherein the event includes at least one of a pupil motion of a user, a flick of any one of a user's finger and a stylus pen, and a finger motion of a user.

10. The method of claim 7, wherein the display region indicates a region displayed on a screen (601) of the portable terminal in the web page.

11. The method of claim 7, wherein in the displaying of the display region using the tag as a boundary, the display region is displayed so as to include a category corresponding to the tag.

12. The method of claim 7, wherein in the displaying of the display region using the tag as a boundary, the display region is displayed so as not to include a category corresponding to the tag.
